# EUROPEAN PATENT SPECIFICATION

(11) **EP 0 578 750 B1**
(45) Date of publication and mention of the grant of the patent: **17.06.1998**
(21) Application number: 92910256.4
(22) Date of filing: 31.03.1992
(51) Int. Cl.: B32B 27/32, G09F 3/04

(54) **STABLE PRESSURE SENSITIVE SHRINK LABEL TECHNIQUE**
STABILE DRUCKEMPFINDLICHE SCHRUMPFLABEL-TECHNIK
TECHNIQUE DE FORMATION D'ETIQUETTES A RETRECISSEMENT SENSIBLE A LA PRESSION ET STABLE

(30) Priority: 02.04.1991 US 679222
(43) Date of publication of application: 19.01.1994
(73) Proprietor: AVERY DENNISON CORPORATION, Pasadena California 91103 (US)
(72) Inventor: LIN, Kenneth, S., C., San Marino, CA 91108 (US); COWARD, Roderick, Thomas, Mississauga, Ontario L5G 3C5 (CA); WILSON, Douglas, Wayne, Covina, CA 91723 (US)
(74) Representative: Abrams, Michael John
(86) International application number: PCT/US92/02539
(87) International publication number: WO 92/17306

(56) References cited:
- US-A- 3 032 463
- US-A- 3 873 018
- US-A- 4 013 494
- US-A- 4 233 331
- US-A- 4 392 898

## Description

This invention relates to shrink labels which may be applied to products and subsequently, when heat is applied to the labels, will shrink in size to the desired final configuration.

Shrink labels have previously been formed from polyvinyl chloride (PVC). However, PVC plastic is not favored from an environmental standpoint, in view of the presence of chlorine in its composition. In addition, its relatively high density makes for correspondingly high costs for labels of a given thickness. Further, following initial shrinking of the PVC labels onto the product, relatively high ambient temperatures, which may be encountered in storing the products, causes further undesired shrinkage; and the PVC labels are therefore undesirable for many products.

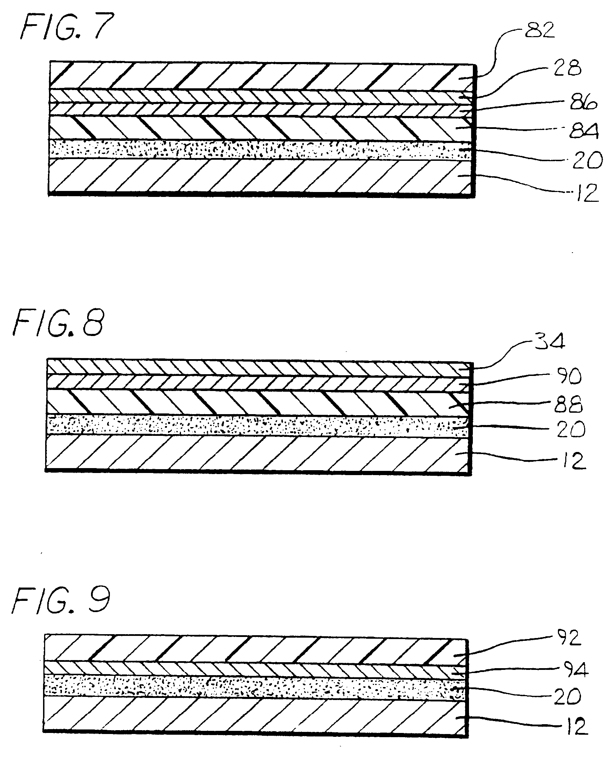

Three inter-related prior art patents which disclose PVC shrinkable layers are U.S. Patent No. 4,801,514 granted January 31, 1989; U.S. Patent No. 4,911,994 granted March 27, 1990; and U.S. Patent No. 5,032,477 granted July 16, 1991. These patents all have the same eight figures of their drawings, with FIG. 7 showing shrinkable PVC label on a flashlight type battery. They all disclose PVC as being the principal heat shrinkable material, and U.S. Patent No. 5,032,477 also includes in Claim 2 the use of polyethylene terephthalate (PET) as a heat shrinkable material. The three patents also disclose that *"*particularly good insulation protection is obtained by placing the vapor deposited layer on the rear side of a foil of polypropylene or polyethylene terephthalate.*"* However, none of the three patents disclose the use of shrinkable polypropylene. Also in the prior art US-A-3032463 discloses a method for making punched label stock.

Polypropylene presents certain special problems, and has not been available as a uni-directionally heat shrinkable label material until very recently. Further, it presents other problems involving the adhering of graphics, vapor deposited metal layers and adhesives. Unless the propylene is specially treated, none of the foregoing will adhere to polypropylene. The inventors in the present case initially received some uniaxially shrinkable polypropylene from Exxon Chemicals of Lake Zurich, Illinois. When initially received, an attempt was made to have a vapor coated metallization layer applied, and this attempt, by the company which has usually supplied such services to the Applicant, was unsuccessful. Corona treatment is known to aid in adhesion, and at the suggestion of the inventors, one side of the polypropylene is corona treated at a level of 44 dynes per centimeter to receive metallization and the other side is corona treated at about 37 dynes per centimeter to receive adhesive. The corona treatment involves oxidation of the surface, and it was found that this decreases with time. Another company, Metalization Engineering Company, Inc. of Waterbury, Connecticut, has been successful in metal vapor deposition or metallization. It is also noted that a top coating or primer may be employed to permit printing on the polypropylene. One such coating is sold as Polaqua 1000 by ADMtronics Ltd. Inc.

It is further noted that the level of corona treatment must not be excessive when it is used on both sides of a roll of polypropylene, because at high levels of corona treatment on both sides, the material becomes exceedingly difficult to unroll.

Much of the foregoing work with polypropylene took place in 1991, and it is not believed that uniaxially heat shrinkable polypropylene was available, and it is not believed that methods for treating polypropylene so that printing, metallization and adhesives will adhere to the uniaxially heat shrinkable polypropylene were known at the time of filing the prior art patents cited hereinabove.

Accordingly, a principle object of the present invention is to provide an improved shrink label product which is (1) environmentally friendly, (2) has a lower density and is therefore less costly than prior known PVC and PET labels and (3) is stable on heat aging.

According to a first aspect of the present invention, there is provided an assembly of heat shrinkable labels, comprising:
a backing sheet having a release coating thereon; and
a plurality of heat shrinkable labels removably mounted on the release coating by means of a layer of pressure-sensitive adhesive,
   **characterised in that** each label comprises a polypropylene film which is heat shrinkable in one dimension by 20% or more at elevated temperatures.

According to a second aspect of the present invention, there is provided a method for the production of an assembly of heat shrinkable labels, comprising:
mounting a heat shrinkable film onto a backing sheet having a release coating thereon by means of a layer of pressure sensitive adhesive, and
cutting the film into individual labels mounted on the backing sheet,
   **characterised in that** the film comprises a polypropylene film which is heat shrinkable in one dimension by 20% or more at elevated temperatures.

In one embodiment of the invention, pressure sensitive shrink labels are formed using polypropylene film which shrinks in one dimension by at least 20 to 50 percent at temperatures of about 116°C to about 138°C (about 240°F to about 280°F) or less, and the label stock is coated with a permanent pressure sensitive adhesive and mounted on a backing sheet which is coated with a release layer. Suitable indica may be applied to the labels in the course of the foregoing process. The labels may then be applied to products, using a conventional peeling blade method, and subjected to elevated temperatures in the vicinity of 116°C (240°F) permanently to shrink the labels onto the product. The product can be stored at relatively high ambient temperatures, such as, for example, 71°C (160°F) for 24 hours, with further shrinkage or shrinkback being less than about two or three percent.

The label material is preferably shrinkable polypropylene, with a normal shrinkage of approximately 20 to 50 percent at temperatures in the range of about 116°C to 138°C (240°F to 280°F), and has a relatively low shrink-back property after having been applied to a product, in the order of less than 3 percent.

The pressure sensitive adhesive is preferably a permanent pressure sensitive adhesive, and an acrylic adhesive is preferred.

The label may be laminated and may include metalization and printed graphics between two laminations.

When two polyolefin layers are used, a laminating adhesive is employed to secure the two layers together; and the laminating adhesive may be any flexible adhesive which provides proper bonding between the outer laminating film and the base portion of the label. The laminating adhesive must be flexible and have a strong bond to accommodate the dimensional changes during shrinking.

Alternatively, only a single layer of shrinkable polyolefin material may be used, and the graphics may be applied to the upper surface thereof, with a suitable varnish or other protective layer applied over the graphics for protection. As a further alternative, the graphics may be reverse printed underneath the polyolefin material and the pressure sensitive adhesive applied thereto.

Advantages of the new shrink label include (1) a more environmentally friendly product which does not include chlorine, (2) lower cost of product because polypropylene is approximately 1/3 lighter or less dense than the polyvinyl chloride shrinkable labels which were previously used, and (3) the polypropylene labels have less shrink-back, or shrinkage after having been applied, under high ambient temperature storage conditions.

For a better understanding of the invention, and to show how the same may be carried into effect, reference will now be made, by way of example, to the accompanying drawings, in which:-
FIG. 1 is an exploded view of a first label in accordance with the present invention;
FIG. 2 is an exploded view of a second, simpler label in accordance with the present invention;
FIG. 3 shows a shrink label applied to a small battery cell;
FIG. 4 illustrates comparative tests using polypropylene labels and PVC labels, following a *"*shrink-back*"* test;
FIG. 5 shows the application of shrinkable labels to a product such as a small battery;
FIG. 6 is a plot of percentage shrinkage against oven temperature for the polypropylene labels of the present invention;
FIG. 7 is a side or cross-sectional view of a third label in accordance with the present invention, using two layers of a polypropylene film, including metal colored paint graphics;
FIG. 8 is a side or cross-sectional view of a fourth label in accordance with the present invention, using a single layer of polypropylene, and metal colored ink graphics on the outer surface of the polypropylene layer; and
FIG. 9 shows a fifth label similar to that of FIG. 8 with reverse printed graphics on the bottom of the polypropylene.

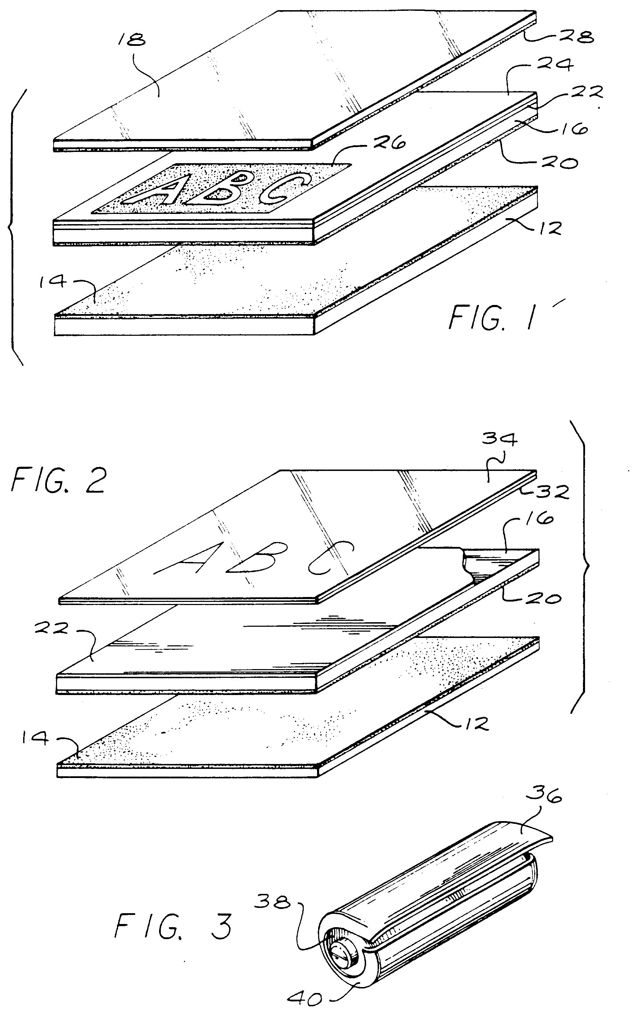

Referring now to the drawings, FIG. 1 is an exploded view of a multiple layer label.

Starting from the bottom, the backing sheet 12 has a very thin release layer 14, normally silicone, coated onto it. The label per se is formed of two layers 16 and 18, of shrinkable polyolefin such as polypropylene.

Shrinkable plastic films are formed by stretching plastic film material under somewhat elevated temperature conditions, and then quenching the film, or rapidly lowering its temperature. Subsequently, when relative high temperature is applied to the film, it will shrink along the direction in which it has been stretched. In the present case, the shrinkable polypropylene film may be purchased under the designation *"*XPP-XL13*"*, from Exxon Chemical Company, P.O. Box 3272, Houston, TX 77253-3272.

A layer of permanent pressure sensitive adhesive 20 is applied to the lower surface of the layer 16 of the label. The adhesive layer 20 will cause the layer 16 to adhere to the backing sheet 12 but only lightly, in view of the presence of the release layer 14. The permanent pressure sensitive adhesive may be an acrylic adhesive sold under the designation Aroset 1860-2-45 by Ashland Chemical Company, 5200 Blazer Parkway, Dublin, Ohio 43017. Other permanent pressure sensitive adhesives, such as rubber based adhesives, may also be employed. With regard to types of adhesives which are known as *"*permanent*"* pressure sensitive adhesives, using standard measuring techniques in accordance with Pressure Sensitive Tape Council Standards, permanent adhesives normally have a peel force of 0.9 to 1.4 kg per 2.5 cm (2 or 3 or more pounds per one inch) strip, measured when the tape is being pulled off perpendicular to the orientation of the tape from a stainless steel base member, while removable self-adhesive or pressure sensitive adhesive materials normally have a peel force less than about 0.7 kg (1.5 pounds).

Returning to FIG. 1, a metalization layer 22 may be applied to the upper or lower surface of the shrinkable polypropylene layer 16. If applied to the lower surface, it would of course be above the adhesive layer 20, as shown in FIG. 1. The metalization process is commonly used in the film industry, and involves the deposition of a thin layer of metal vapor on a plastic film to achieve a mirror-like appearance of the film. In the present case metalization of the film provides enhanced label graphic appearance. One of a number of metalizing facilities providing this service is Dunmore Corporation at Newtown Industrial Commons, Penn's Trail, Newtown, Pennsylvania. The preferred metallization is aluminum, but other metals may be employed.

Graphics, as indicated by the layer 24 may be applied to the label 16, on top of the metalization layer 22. By making partially open types of letters or other graphics, as indicated at reference numeral 26, the metalization layer is visible through the openings in the printed graphics and makes for an interesting and pleasing appearance.

The upper polypropylene layer 18 has its shrinkable direction aligned with that of base label, and may be adhered to the layer 16 by a suitable laminating adhesive 28 which may be a flexible adhesive which would provide secure bonding between the laminating film and the remainder of the label, during shrinkage which is one of the steps which will occur. The pressure sensitive acrylic adhesives mentioned above may be used. Alternatively, other known permanent laminating adhesives or pressure sensitive adhesives, including rubber based adhesives, may be used.

FIG. 2 shows a simpler construction in which only one layer 16 of shrinkable polyolefin is used. The graphics layer is indicated by the reference numeral 32 and an upper transparent layer 34 of varnish is provided to protect the graphics.

FIG. 3 shows a shrink label 36 applied to a battery 38. The label 36 is shown partly unrolled, for ease of visualization, but the end 40 of the label is shown as it would be following a heat treatment, when the label 36 is shrunk onto and partially encloses the ends of the battery, as well as fitting tightly around the battery in the central area thereof. The shrinkable direction of the polypropylene is of course aligned with the periphery of the battery.

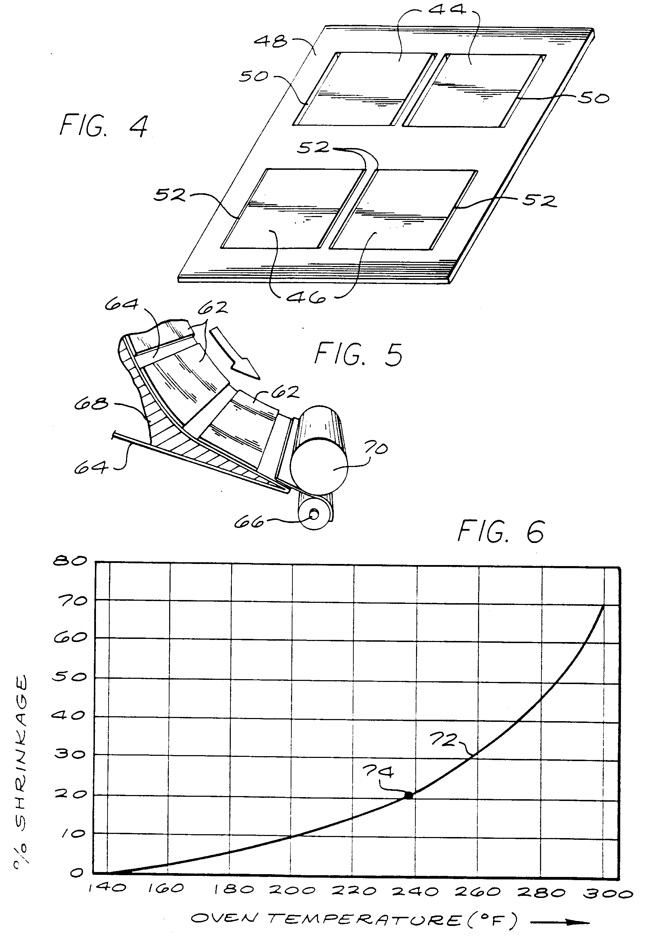

FIG. 4 shows two labels 44 which are formed of polyvinyl chloride film material, and two labels 46 which are formed of a polypropylene film. The two sets of labels were mounted on a metal plate 48. The labels on the test plate 48 have been applied and initially heat treated at an elevated temperature in the order of 116°C or 138°C (240°F or 250°F). Following this initial shrinking step, a shrink-back test was conducted as follows. The plate with the applied labels as shown in FIG. 4 was held at an elevated temperature of approximately 71°C (160°) for 24 hours. This test was in the nature of an accelerated elevated temperature storage test which would simulate a storage at a fairly high temperature such as 49°C (120°F), which might be encountered in a storage warehouse, for a longer period of time such as a year, for example. The results of the test are indicated by the spaces 50 at each side of the upper set of PVC labels 44; and this indicates the undesirably large shrink back of PVC shrink labels. On the other hand, very little shrink-back is found along the edges 52 of the lower labels which employed polypropylene. More specifically, the upper labels shrank back at least 2.4 mm (3/32 inch) or 3.2 mm (1/8 inch) over the 51 mm (two inch) width of the labels, while the lower set of polypropylene labels 46 shrank back by a distance of less than 0.8 mm (1/32 of an inch). In each case, the width of the labels was 51 mm (two inches). Using the ratio of 3.2 to 51 mm (1/8 to two inches), which is equal to 16/8, the shrink-back for the PVC shrinkable labels was approximately 1/16 or 6 percent, while for the polypropylene labels, the shrinkage of approximately 0.8 mm (1/32 of an inch) was approximately 1.6 percent. Accordingly, the shrink-back qualities of the polypropylene film is much less than, and is therefore far superior to that of the PVC film. Further, it is noted that the high shrink-back of the PVC shrinkable film label was such that these labels were not acceptable for some commercial applications. Incidentally, as used in the present specification and claims, the discussion of shrink back under "relatively high ambient temperatures for prolonged periods of time" refers to storage at temperature-time conditions comparable to storage at 71°C (160°F) for 24 hours, such as storage in a warehouse at a temperature of a fairly high temperature, such as 49°C (120°F) for a longer period of time, such as a year, for example.

FIG. 5 shows the application of label 62 from a backing sheet 64 to a product 66 using a peeling blade 68 and a roller 70. FIG. 5 indicates the conventional manner in which labels 62 mounted on a backing sheet 64 are applied to products. Incidentally, in the normal course of label fabrication, a roll of a release coated liner or backing material is further coated with pressure sensitive adhesive and then the polypropylene label stock would be layered onto the adhesive and release coated backing strip. The labels are then die cut and the waste label stock removed, with the appearance of the resulting labels on the backing strip then being substantially as shown in Fig. 5. The pressure sensitive adhesive is coated onto the backing sheet instead of onto the polypropylene, in view of the normal heating of the adhesive to speed up drying, which could shrink the polypropylene to some extent. If an adhesive coating process were used which did not involve heating, the pressure sensitive adhesive could be coated onto the polypropylene.

FIG. 6 is a plot of the percentage shrinkage versus oven temperature, for the polypropylene film identified hereinabove. The plot 72 is the average of a number of test runs which were made on this type of film. Normally, a shrinkage of approximately 20 percent, as indicated by the point 74 on the plot 72, is acceptable, and this may be achieved by temperatures in the order of 116 or 121°C (240 F or 250°F).

Concerning the thickness of the layers of shrinkable material, it is noted that varying thicknesses may be used depending on the label requirements, but normally, for a single polypropylene layer as in Fig. 2, the preferred thickness would be about 0.05 mm (0.002 inch or 2 mils), while for a two layer label as in Fig. 1, the thickness of each layer would be about 0.03 mm (1.25 mils).

It is further noted that, for a 0.05 mm (two mil) film, one pound of polyvinyl chloride would extend over 65800 cm² (10.2 thousand square inches), while polypropylene would extend over 98700 cm² (15.3 thousand square inches). Thus, with the price per pound of the two materials being comparable, the lower density of polypropylene makes for significantly lower materials cost for comparable thickness labels.

Other alternative arrangements which do not use a vapor deposited metal layer, as in FIGS. 1 and 2 are shown in FIGS. 7 to 9. In each case, a backing layer 12 is still used.

In FIG. 7, two layers of polypropylene 82 and 84 are employed with graphics in the form of a metallic colored ink 86, including metal flake particles, being applied to the lower polypropylene layer 84. The upper polypropylene layer 82 is secured to the lower layer with laminating adhesive 28, as discussed above in connection with FIG. 1. The metal colored ink 86 with metal flake particles to provide good reflective properties is available from EM Industries, Inc., 5 Skyline Drive, Hawthorne, N.Y. 19532, although this type of ink may also be available from other sources.

The embodiment of FIG. 8 uses a single layer of polypropylene 88 with the metal colored ink layer 90 (of the same type as the graphics ink 86) being applied to the upper surface of polypropylene layer 88. A varnish coating 34 (as in FIG. 2) protects the graphics. The graphics may be silk screened or printed onto the polypropylene layer. Further, the ink may be curable using ultraviolet light, or other types of ink compositions may be employed.

In the simplified alternative embodiment of Fig. 9, the single polypropylene layer has reversed printed graphics 94 on its lower surface, using the same type of metal ink described above. The pressure sensitive adhesive layer 20 and backing sheet 12 complete the simplified four layer assembly of Fig. 9.

In connection with FIG. 4 of the drawings, it was noted above that the shrink-back properties of polypropylene are superior to PVC under "relatively high ambient temperatures for prolonged periods of time", and as used in this case such phrase refers to storage at temperature-time conditions comparable to storage at 71°C (160 degrees F) for 24 hours or storage at temperatures above 38°C (100 degrees°F) for much longer periods of time so as to produce substantially comparable shrink-back of the shrinkable layers.

The shrinkable film may be formed of other polyolefin materials such as polyethylene, in addition to polypropylene, and other known label configurations may be employed using the shrinkable film as disclosed herein.

## Claims

1. An assembly of heat shrinkable labels, comprising:
a backing sheet (12) having a release coating (14) thereon; and
a plurality of heat shrinkable labels removably mounted on the release coating (14) by means of a layer of pressure-sensitive adhesive (20),
**characterised in that** each label comprises a polypropylene film (16;36;84;88;92) which is heat shrinkable in one dimension by 20% or more at elevated temperatures.

2. An assembly as claimed in claim 1, wherein the polypropylene film (16;36;84;88;92) has an initial shrinkage factor of 20% or more at temperatures in the vicinity of 121°C (250°F) and a subsequent shrink-back factor of less than 3% under high ambient temperature storage conditions.

3. A label assembly as claimed in claim 1 or claim 2, wherein the polypropylene film (16;36;84;88;92) has an initial shrinkage factor of between 20 and 50% at temperatures in the range of 116 to 138°C (240 to about 280°F).

4. An assembly as claimed in claim 1, 2 or 3, wherein each label further comprises a metallization layer (22) applied to the polypropylene film (16).

5. An assembly as claimed in any preceding claim, wherein each label has graphics (24;32) thereon.

6. An assembly as claimed in claim 5, wherein the graphics (24;32) are on the upper surface of the polypropylene film (16;84;88) opposite the surface adhered to the backing sheet (12).

7. An assembly as claimed in claim 6 when appended to claim 4, wherein the graphics (24) are open style graphics (26) which are printed onto the labels, so that the metallization layer (22) shows through the graphics (26).

8. An assembly as claimed in claim 5 or claim 6, wherein the graphics comprise metal-coloured ink (86;90) containing metallic flakes.

9. An assembly as claimed in claim 5, 6, 7 or 8, wherein each label further comprises an additional layer of polypropylene film (18;82) which is laminated to the upper surface of the polypropylene film (16;84) to protect the graphics (24;86).

10. An assembly as claimed in claim 5, 6, 7 or 8, wherein each label further comprises a layer of varnish (34) on the upper surface of the polypropylene film (16;88) to protect the graphics (32;90).

11. An assembly as claimed in claim 5, wherein the graphics (94) are reverse printed on the underneath side of the polypropylene label (92), the pressure sensitive adhesive (20) being between the reverse-printed graphics (94) and the release coating (14).

12. A label assembly as claimed in any preceding claim, wherein the pressure sensitive adhesive (20) is a permanent pressure sensitive adhesive.

13. A label assembly as claimed in claim 12, wherein the permanent pressure sensitive adhesive is an acrylic adhesive.

14. A method for the production of an assembly of heat shrinkable labels, comprising:
mounting a heat shrinkable film onto a backing sheet (12) having a release coating (14) thereon by means of a layer of pressure sensitive adhesive (20), and
cutting the film into individual labels mounted on the backing sheet (20),
**characterised in that** each label comprises a polypropylene film (16;36;84;88;92) which is heat shrinkable in one dimension by 20% or more at elevated temperatures.

15. A method as claimed in claim 14, wherein the polypropylene film (16;36;84;88;92) has an initial shrinkage factor of 20% or more at temperatures in the vicinity of 121°C (250°F) and a subsequent shrink-back factor of less than 3% under high ambient temperature storage conditions.

16. A method as claimed in claim 14 or claim 15, wherein the polypropylene film (16;36;84;88;92) has an initial shrinkage factor of between about 20 and 50% at temperatures in the range of 116 to 138°C (240 to about 280°F).

17. A method as claimed in claim 14, 15 or 16, further comprising applying a metallisation layer (22) to the film (16).

18. A method as claimed in any one of claims 14 to 17, further comprising applying graphics (24;32) to the film (16).

19. A method as claimed in claim 18 when appended to claim 17, wherein open style graphics (26) are printed onto the film, so that the metallization layer (22) shows through the graphics (26).

20. A method as claimed in claim 18, wherein the graphics comprise metal-coloured ink (86;90) containing metallic flakes.

21. A method as claimed in claim 18, 19 or 20, further comprising by applying an additional layer over the graphics to protect the graphics.

22. A method as claimed in claim 21, wherein the additional layer is an additional layer of polypropylene film (18;82).

23. A method as claimed in claim 22, wherein the additional layer of polypropylene film (18;82) is secured by a laminating adhesive (28).

24. A method as claimed in claim 21, wherein the additional layer is a layer of varnish (34).

25. A method as claimed in claim 18, wherein the graphics (94) are reverse printed on the underneath side of the polypropylene film (92), the pressure sensitive adhesive (20) being between the reverse-printed graphics (94) and the release coating (14) in the assembly.

26. A method as claimed in any one of claims 14 to 25, wherein the pressure sensitive adhesive (20) is applied to the backing sheet (12) prior to mounting the film (16;36;84;88;92) onto the backing sheet (12).

27. A label assembly as claimed in any one of claims 14 to 26, wherein the pressure sensitive adhesive (20) is a permanent pressure sensitive adhesive.

## Patentansprüche

1. Zusammenstellung von Schrumpfetiketten, umfassend:
eine Trägerschicht (12), auf der sich eine Ablöseschicht (14) befindet; und
eine Anzahl Schrumpfetiketten, die mit Hilfe einer selbstklebenden Schicht (20) ablösbar auf der Ablöseschicht (14) befestigt sind,
dadurch gekennzeichnet, daß jedes Etikett einen Polypropylenfilm (16; 36; 84; 88; 92) enthält, der bei erhöhten Temperaturen in einer Richtung um 20 Prozent oder mehr schrumpfen kann.

2. Zusammenstellung nach Anspruch 1, wobei der Polypropylenfilm (16; 36; 84; 88; 92) einen anfänglichen Schrumpfungsfaktor von 20 Prozent oder mehr bei Temperaturen in der Nähe von 121°C (250°F) aufweist und danach einen Nachschrumpffaktor von weniger als 3 Prozent bei einer Lagerung unter hohen Umgebungstemperaturen.

3. Etikettenzusammenstellung nach Anspruch 1 oder 2, wobei der Polypropylenfilm (16; 36; 84; 88; 92) einen anfänglichen Schrumpfungsfaktor zwischen 20 und 50 Prozent bei Temperaturen im Bereich von 116 bis 138°C (240 bis ungefähr 280°F) aufweist.

4. Zusammenstellung nach Anspruch 1, 2 oder 3, wobei jedes Etikett zudem eine Metallisierungsschicht (22) enthält, die auf dem Polypropylenfilm (16) angebracht ist.

5. Zusammenstellung nach irgendeinem vorhergehenden Anspruch, wobei sich auf jedem Etikett graphische Darstellungen (24; 32) befinden.

6. Zusammenstellung nach Anspruch 5, wobei sich die graphischen Darstellungen (24; 32) auf der oberen Fläche des Polypropylenfilms (16; 84; 88) gegenüber der Fläche befinden, die auf der Trägerschicht (12) klebt.

7. Zusammenstellung nach Anspruch 6 wenn abhängig von Anspruch 4, wobei die Graphiken (24) durchbrochene Graphiken (26) sind, die auf die Etiketten gedruckt werden, so daß die Metallisierungsschicht (22) durch die Graphik (26) zu sehen ist.

8. Zusammenstellung nach Anspruch 5 oder Anspruch 6, wobei die Graphiken eine metallfarbene Tinte (86; 90) umfassen, die Metallschuppen enthält.

9. Zusammenstellung nach Anspruch 5, 6, 7 oder 8, wobei jedes Etikett zudem eine Zusatzschicht aus Polypropylenfilm (18; 82) enthält, die auf die obere Fläche des Polypropylenfilms (16; 84) laminiert wird, damit die Graphiken (24; 86) geschützt sind.

10. Zusammenstellung nach Anspruch 5, 6, 7 oder 8, wobei jedes Etikett zudem eine Lackschicht (34) auf der oberen Fläche des Polypropylenfilms (16; 88) enthält, damit die Graphiken (32; 90) geschützt sind.

11. Zusammenstellung nach Anspruch 5, wobei die Graphiken (94) rückwärtig auf die Unterseite des Polypropylenetiketts (92) gedruckt sind und der Selbstkleber (20) zwischen den rückwärtig gedruckten Graphiken (94) und der Ablöseschicht (14) angeordnet ist.

12. Etikettenzusammenstellung nach irgendeinem vorhergehenden Anspruch, wobei der Selbstkleber (20) ein fest haftender Selbstkleber ist.

13. Etikettenzusammenstellung nach Anspruch 12, wobei der fest haftende Selbstkleber ein Acrylkleber ist.

14. Verfahren zum Herstellen einer Zusammenstellung von Schrumpfetiketten, umfassend:
das Anbringen eines schrumpfbaren Films auf einer Trägerschicht (12), auf der sich eine Ablöseschicht (14) befindet, mit Hilfe einer Selbstkleberschicht (20), und
das Zerschneiden des Films zu Einzeletiketten, die auf der Trägerschicht (12) befestigt sind,
dadurch gekennzeichnet, daß jedes Etikett einen Polypropylenfilm (16; 36; 84; 88; 92) enthält, der bei erhöhten Temperaturen in einer Richtung um 20 Prozent oder mehr schrumpfen kann.

15. Verfahren nach Anspruch 14, wobei der Polypropylenfilm (16; 36; 84; 88; 92) einen anfänglichen Schrumpfungsfaktor von 20 Prozent oder mehr bei Temperaturen in der Nähe von 121°C (250°F) aufweist und einen folgenden Nachschrumpffaktor von weniger als 3 Prozent bei einer Lagerung unter hohen Umgebungstemperaturen.

16. Verfahren nach Anspruch 14 oder Anspruch 15, wobei der Polypropylenfilm (16; 36; 84; 88; 92) einen anfänglichen Schrumpfungsfaktor ungefähr zwischen 20 und 50 Prozent bei Temperaturen im Bereich von 116 bis 138°C (240 bis ungefähr 280°F) aufweist.

17. Verfahren nach Anspruch 14, 15 oder 16, zudem umfassend das Anbringen einer Metallisierungsschicht (22) auf dem Film (16).

18. Verfahren nach irgendeinem der Ansprüche 14 bis 17, ferner umfassend das Anbringen von Graphiken (24; 32) auf dem Film (16).

19. Verfahren nach Anspruch 18 wenn abhängig von Anspruch 17, wobei durchbrochene Graphiken (26) auf den Film gedruckt werden, so daß die Metallisierungsschicht (22) durch die Graphiken (26) zu sehen ist.

20. Verfahren nach Anspruch 18, wobei die Graphiken eine metallfarbene Tinte (86; 90) umfassen, die Metallschuppen enthält.

21. Verfahren nach Anspruch 18, 19 oder 20, zudem umfassend das Anbringen einer Zusatzschicht über den Graphiken, damit die Graphiken geschützt sind.

22. Verfahren nach Anspruch 21, wobei die Zusatzschicht eine Zusatzschicht aus Polypropylenfilm (18; 82) ist.

23. Verfahren nach Anspruch 22, wobei die Zusatzschicht aus Polypropylenfilm (18; 82) mit einem Laminierkleber (28) befestigt ist.

24. Verfahren nach Anspruch 21, wobei die Zusatzschicht eine Lackschicht (34) ist.

25. Verfahren nach Anspruch 18, wobei die Graphiken (94) rückwärtig auf die Unterseite des Polypropylenfilms (92) gedruckt sind, und der Selbstkleber (20) zwischen den rückwärtig gedruckten Graphiken (94) und der Ablöseschicht (14) in der Zusammenstellung angeordnet ist.

26. Verfahren nach irgendeinem der Ansprüche 14 bis 25, wobei der Selbstkleber (20) auf der Trägerschicht (12) vor dem Anbringen des Films (16; 36; 84; 88; 92) auf der Trägerschicht (12) angebracht wird.

27. Etikettenzusammenstellung nach irgendeinem der Ansprüche 14 bis 26, wobei der Selbstkleber (20) ein fest haftender Selbstkleber ist.

## Revendications

1. Ensemble d'étiquettes thermorétractables, comprenant:
une feuille de support (12) comportant un revêtement de décollement (14); et
une pluralité d'étiquettes thermorétractables montées de façon détachable sur le revêtement de décollement (14) à l'aide d'une couche d'un adhésif (20) collant sous l'effet de la pression,
caractérisé en ce que chaque étiquette comprend un film de polypropylène (16; 36; 84; 88; 92) qui est thermorétractable dans une seule dimension et dont le retrait peut être de 20% ou plus aux températures élevées.

2. Ensemble selon la revendication 1, dans lequel le film de polypropylène (16; 36; 84; 88; 92) présente un pourcentage de retrait initial de 20% ou plus aux températures voisines de 121°C (250°F) et un pourcentage de retrait supplémentaire ultérieur de moins de 3% dans des conditions de stockage aux températures ambiantes élevées.

3. Ensemble d'étiquettes selon la revendication 1 ou la revendication 2, dans lequel le film de polypropylène (16; 36; 84; 88; 92) présente un pourcentage de retrait initial allant de 20% à 50% aux températures comprises dans la plage allant de 116 à 138°C (240 jusqu'à environ 280°F).

4. Ensemble selon la revendication 1, 2 ou 3, dans lequel chaque étiquette comprend, en outre, une couche de métallisation (22) appliquée au film de polypropylène (16).

5. Ensemble selon l'une quelconque des revendications précédentes, dans lequel chaque étiquette porte des représentations graphiques (24; 32).

6. Ensemble selon la revendication 5, dans lequel les représentations graphiques (24; 32) se trouvent sur la surface supérieure du film de polypropylène (16; 84; 88) située à l'opposée de la surface qui adhère à la feuille de support (12).

7. Ensemble selon la revendication 6 quand elle est rattachée à la revendication 4, dans lequel les représentations graphiques (24) sont des représentations graphiques (26) du type ajouré qui sont imprimées sur les étiquettes de sorte que la couche de métallisation (22) apparaît à travers les représentations graphiques (26).

8. Ensemble selon la revendication 5 ou la revendication 6, dans lequel les représentations graphiques comprennent une encre métallisée (86; 90) contenant des flocons métalliques.

9. Ensemble selon la revendication 5, 6, 7 ou 8, dans lequel chaque étiquette comprend, en outre, une couche supplémentaire d'un film de polypropylène (18; 82) qui est disposé sous la forme d'une couche sur la surface supérieure du film de polypropylène (16: 84) pour protéger les représentations graphiques (24; 86).

10. Ensemble selon 5, 6, 7 ou 8, dans lequel chaque étiquette comprend, en outre, une couche de vernis (34) sur la surface supérieure du film de polypropylène (16; 88) pour protéger les représentations graphiques (32; 90).

11. Ensemble selon la revendication 5, dans lequel les représentations graphiques (94) sont imprimées de façon inverse sur le côté de dessous de l'étiquette (92) en polypropylène, l'adhésif (20) collant sous l'effet de la pression se trouvant entre les représentations graphiques imprimées (94) de façon inverse et le revêtement de décollement (14).

12. Ensemble d'étiquettes selon l'une quelconque des revendications précédentes, dans lequel l'adhésif (20) collant sous l'effet de la pression est un adhésif autocollant.

13. Ensemble d'étiquettes selon la revendication 12, dans lequel l'adhésif autocollant est un adhésif acrylique.

14. Procédé pour la fabrication d'un ensemble d'étiquettes thermorétractables, comprenant les étapes consistant:
à monter un film thermorétractrable sur une feuille de support (12), comportant un revêtement de décollement (14), au moyen d'une couche d'un adhésif (20) collant sous l'effet de la pression, et
à découper le film en étiquettes individuelles montées sur la feuille de support (20),
caractérisé en ce que chaque étiquette comprend un film de polypropylène (16; 36; 84; 88; 92) qui est thermorétractable dans une seule dimension et dont le retrait peut être de 20% ou plus aux températures élevées.

15. Procédé selon la revendication 14, dans lequel le film de polypropylène (16; 36; 84; 88; 92) présente un pourcentage de retrait initial de 20% ou plus aux températures voisines de 121°C (250°F) et une pourcentage de retrait supplémentaire ultérieur de moins de 3% dans des conditions de stockage à des températures ambiantes élevées.

16. Procédé selon la revendication 14 ou la revendication 15, dans le quel le film de polypropylène (16; 36; 84; 88; 92) présente un pourcentage de retrait initial allant d'environ 20 à 50% aux températures comprises dans la plage allant de 116 à 138°C (240 jusqu'à environ 280°F).

17. Procédé selon la revendication 14, 15 ou 16, comprenant, en outre, l'application d'une couche de métallisation (22) au film (16).

18. Procédé selon l'une quelconque des revendications 14 à 17, comprenant, en outre, l'application de représentations graphiques (24; 32) au film (16).

19. Procédé selon la revendication 18 quant elle est rattachée à la revendication 17, dans lequel des représentations graphiques du type ajouré (26) sont imprimées sur le film, de sorte que la couche de métallisation (22) apparaît à travers les représentations graphiques (26).

20. Procédé selon la revendication 18, dans lequel les représentations graphiques comprennent une encre métallisée (86; 90) contenant des flocons métalliques.

21. Procédé selon la revendication 18, 19 ou 20, comprenant, en outre, l'application d'une couche supplémentaire sur les représentations graphiques pour protéger ces représentations graphiques.

22. Procédé selon la revendication 21, dans lequel la couche supplémentaire est une couche supplémentaire d'un film de polypropylène (18; 82).

23. Procédé selon la revendication 22, dans lequel la couche supplémentaire de film de polypropylène (18; 82) est fixée par un adhésif (28) de stratification.

24. Procédé selon la revendication 21, dans lequel la couche supplémentaire est une couche de vernis (34).

25. Procédé selon la revendication 18, dans lequel les représentations graphiques (94) sont imprimées de façon inverse sur le côté de dessous du film de polypropylène (92), l'adhésif (20) agissant sous l'effet de la pression se trouvant entre les représentations (26), imprimées de façon inverse, et le revêtement de décollement (14) dans l'ensemble.

26. Procédé selon l'une quelconque des revendications 14 à 25, dans lequel l'adhésif (20) collant sous l'effet de la pression est appliqué à la feuille de support (12) avant le montage du film (16; 36; 84, 88, 92) sur la feuille de support (12).

27. Ensemble d'étiquettes selon l'une quelconque des revendications 14 à 26, dans lequel l'adhésif (20) collant sous l'effet de la pression est un adhésif autocollant.
